# EUROPÄISCHE PATENTSCHRIFT

(11) **EP 2 608 298 B1**
(45) Veröffentlichungstag und Bekanntmachung des Hinweises auf die Patenterteilung: **04.07.2018**
(21) Anmeldenummer: 11195412.9
(22) Anmeldetag: 22.12.2011
(51) Int. Cl.: H01M 4/86, H01M 4/90, H01M 4/92, C25B 1/08, C25B 11/04, H01M 8/1018

(54) **Elektrokatalysator für Brennstoffzellen sowie Verfahren zu seiner Herstellung**
Electro-catalyst for fuel cells and method for its production
Catalyseur électrique pour cellules de combustible ainsi que son procédé de fabrication

(43) Veröffentlichungstag der Anmeldung: 26.06.2013
(73) Patentinhaber: Umicore AG & Co. KG, 63457 Hanau-Wolfgang (DE)
(72) Erfinder: Klose-Schubert, Barbara, 60596 Frankfurt am Main (DE); Herein, Daniel, 60487 Frankfurt am Main (DE); Lopez, Marco, 60439 Frankfurt am Main (DE)

(56) Entgegenhaltungen:
- EP-A1- 1 254 711
- EP-B1- 1 701 790
- WO-A1-03/078056
- WO-A1-2006/045606
- WO-A1-2008/025750
- US-A1- 2009 186 248

## Beschreibung

Brennstoffzellen sind im Prinzip gasbetriebene Batterien, bei denen die aus der Reaktion von Wasserstoff und Sauerstoff (bzw Luft) gewonnene Energie direkt in elektrische Energie umgesetzt wird. Die vorliegende Erfindung betrifft Katalysatoren für Brennstoffzellen, insbesondere die Herstellung von Trägerkatalysatoren auf der Basis von Platin- und Platinlegierungen für PEM-Brennstoffzellen (PEM = Polymer-Elektrolyt-Membran-Brennstoffzellen). Dieser Brennstoffzellentyp gewinnt wegen seiner hohen Energiedichte und Robustheit zunehmende Bedeutung im mobilen Bereich, d.h. für den Einsatz in Kraftfahrzeugen zur Elektrotraktion.

Die Vorteile eines mit Brennstoffzellen betriebenen Autos liegen bei den sehr niedrigen Emissionen sowie dem hohen Wirkungsgrad im Vergleich zu konventionellen Verbrennungsmaschinen. Wird als Brenngas Wasserstoff verwendet, entsteht als einzige Emission Wasser auf der Kathodenseite der Zelle. Es handelt sich dann um ein sogenanntes ZEV (Zero Emission Vehicle). Im Vergleich zu batteriebetriebenen Elektrofahrzeugen weisen die Brenstoffzellenautos eine wesentlich längere Reichweite auf.

Die PEM-Brennstoffzelle besteht aus einer stapelweisen Anordnung ("Stack") von Membran-Elektrodeneinheiten (MEE), zwischen denen bipolare Platten zur Gaszufuhr und Stromableitung angeordnet sind. Eine Membran-Elektrodeneinheit besteht aus einer festen Polymerelektrolyt-Membran, die auf beiden Seiten mit Katalysator enthaltenden Reaktionsschichten versehen ist. Eine der Reaktionsschichten ist als Anode für die Oxidation von Wasserstoff und die zweite Reaktionsschicht als Kathode für die Reduktion von Sauerstoff ausgebildet. Auf diese Reaktionsschichten werden so genannte Gasverteilerstrukturen oder Gasdiffusionsschichten aus Kohlefaserpapier, Kohlefasergewebe oder Kohlevlies aufgebracht, die einen guten Zugang der Reaktionsgase zu den Elektroden und eine gute Ableitung des Zellenstroms ermöglichen. Anode und Kathode enthalten so genannte Elektrokatalysatoren, die die jeweilige Reaktion (Oxidation von Wasserstoff an der Anode beziehungsweise Reduktion von Sauerstoff an der Kathode) katalytisch unterstützen. Als katalytisch aktive Komponenten werden bevorzugt die Metalle der Platingruppe des Periodensystems der Elemente eingesetzt. In der Regel werden so genannte Trägerkatalysatoren verwendet, bei denen die katalytisch aktiven Platingruppenmetalle in hochdisperser Form auf die Oberfläche eines leitfähigen Trägermaterials aufgebracht wurden.

Als Katalysatoren auf der Anoden- und Kathodenseite der PEM-Brennstoffzelle werden Trägerkatalysatoren auf der Basis von Platin- und Platinlegierungen verwendet. Diese enthalten feine Edelmetallpartikel, die auf einem leitfähigen Trägermaterial (meist Ruß oder Graphit) abgeschieden sind.

Elektrokatalysatoren nach dem Stand der Technik sind in der Regel auf leitfähigem Kohlenstoff (insbesondere Leitfähigkeitsruß) geträgert. Die bei der mobilen Anwendung z. T. auftretenden hohen Spannungen bewirken eine Oxidation des Trägers und damit einen Aktivitätsverlust. Dieses Phänomen ist als "carbon corrosion" bekannt.

Die Verwendung eines keramischen Trägers vermeidet dieses Problem. Die Herausforderung besteht jedoch darin, geeignete leitfähige keramische Trägermaterialien mit hoher Struktur bzw. Oberfläche bereitzustellen sowie damit hergestellte Elektrokatalysatoren mit einer hohen aktiven Oberfläche (Edelmetall-Dispersion) und Korrosionsstabilität zu erhalten.

Der Austausch von Kohlenstoff-basierten Materialien gegen einen keramischen Träger, z.B. Oxide wie dotiertes Zinnoxid, Wolframoxid oder partiell reduziertes Titanoxid (TiOₓ) wird in der Literatur vorgeschlagen (vgl. Y. Shao et al, J. Mater. Chem., 2009, 19(1), 46-59 und Yung-Eun Sung et al, Journal of Catalysis, 258, 2008, 143-152.

Aus den US 2009065738 A1 und der US 2007128499 ist die Verwendung dotierter keramischer Oxide als Träger bekannt.

Die WO 2011/065471 A1 beschreibt keramische Träger wie z.B. Antimon-Zinnoxid ("ATO") mit einer kettenartigen Struktur, welche z.B. im Plasma hergestellt werden kann.

Der Nachteil dieser Trägermaterialien liegt darin, dass sie im Gegensatz zu Ruß nur wenig strukturiert sind (d.h. eine niedrige BET-Oberfläche aufweisen). Dies verhindert eine hochdisperse Verteilung der katalytisch aktiven, edelmetallhaltigen Partikel auf dem Trägermaterial, was wiederum eine geringere katalytische Oberfläche und damit eine geringere katalytische Aktivität des Katalysators zur Folge hat. Weiterhin weisen sie eine einheitliche Trägerphase auf, die aus einem oder mehreren leitfähigen Oxiden besteht. Insbesondere bei der Verwendung von Edelmetalloxide (wie beispielsweise Iridiumoxid) wird das Trägermaterial dadurch sehr teuer.

Aus der CN 101087022 B ist ein Verfahren zur Herstellung eines bifunktionellen Katalysators für eine regenerative Brennstoffzelle bekannt, welches als Teilschritte die Dispersion eines Ir-haltigen Trägers (IrO₂, IrO₂-RuO₂ oder IrO₂/TiO₂) in einer Lösung aus Polyol und Wasser und die Zugabe einer Dispersion von chloridhaltigen Pt-Precursoren beinhaltet. Nicht leitende anorganische Oxide werden nicht eingesetzt.

Die WO 2006119407A2 beschreibt Brennstoffzellenelektroden, die einen Katalysator enthalten, der auf einem nicht leitfähigen, keramischen Oxid geträgert ist. Um die Leitfähigkeit in der Schicht zu erreichen, enthält die Elektrode eine leitfähige Matrix aus Metallboriden, -carbiden, -nitriden, - siliciden, -oxyboriden, -oxycarbiden, -oxynitriden oder -carbonitriden.

Die US 2009/0186248 A1 offenbart eine Elektrodeneinheit für eine Brennstoffzelle. Die Anodenschicht umfasst eine erste Katalysatorzusammensetzung umfassend ein Edelmetall, bei dem es sich nicht um Ruthenium handelt, geträgert auf einem korrosionsbeständigen Trägermaterial und eine zweite Katalysatorzusammensetzung, die im Wesentlichen aus einer einphasigen festen Lösung eines Ruthenium enthaltenden Metalloxids besteht, und einem hydrophoben Bindemittel. Das korrosionsbeständige Trägermaterial der ersten Katalysatorzusammensetzung ist mindestens so korrosionsbeständig wie Shawinigan-Acetylenschwarz. Es kann sich um graphitisierten Kohlenstoff oder um Carbide oder elektrisch leitfähige Metalloxide wie z.B. Ti₄O₇ handeln. Die zweite Katalysatorzusammensetzung kann geträgert oder auf einem elektrisch leitfähigen partikelförmigen Träger geträgert sein. Das hydrophobe Bindemittel kann ein fluoriertes Harz oder ein anderes geeignetes Polymer sein. Die US 2009/0186248 A1 enthält keinerlei Hinweise auf die Verwendung nicht elektrisch leitfähiger Oxide.

Aus der EP1701790B1 sind Edelmetalloxid-Katalysatoren für die Elektrolyse von Wasser bekannt, die ein hochoberflächiges anorganisches Oxid sowie Ir- und/oder Ru-oxide enthalten. Sie weisen jedoch keine Beschichtung mit katalytisch aktiven Partikeln auf.

Es war daher eine Aufgabe der vorliegenden Erfindung, Elektrokataly satoren für den Einsatz in PEM-Brennstoffzellen bereitzustellen, die eine hohe Korrosionsstabilität bei gleichzeitig hoher elektrischer Leistung aufweisen. Durch die höhere Korrosionsstabilität dieser neuartigen Katalysatoren sollte ein besseres Anfahr-/Abschaltverhalten (engl. start-up/shut-down, abgekürzt "SUSD") in der automobilen Anwendung der PEM-Brennstoffzelle resultieren.

Eine weitere Aufgabe der Erfindung war die Bereitstellung geeigneter Trägermaterialien für Elektrokatalysatoren. Diese Trägermaterialien sollten elektrisch leitfähig sowie kostengünstig sein und einen reduzierten Anteil an einem teuren leitfähigen Oxid besitzen.

Die Katalysatoren sollten weiterhin in einem industriell einsetzbaren Verfahren herstellbar sein und damit einen Beitrag zur kommerziellen Einführung der PEM-Brennstoffzelle im mobilen Bereich leisten.

Diese Aufgaben werden durch die Bereitstellung der Elektrokatalysatoren gemäß den beiliegenden Ansprüchen gelöst.

### Detaillierte Beschreibung der Erfindung

Die erfindungsgemäßen Elektrokatalysatoren weisen ein mehrkomponentiges leitfähiges Trägermaterial auf, das sich aus einer nicht leitfähigen strukturgebenden Oxidkomponente (OX1) und einer leitfähigen Oxidkomponente (OX2) zusammensetzt. Dieses mehrkomponentige Trägermaterial ("Composit-Trägermaterial") ist mit einer edelmetallhaltigen, katalytisch aktiven Spezies beschichtet. Erfindungsgemäß enthält das mehrkomponentige Trägermaterial (nachfolgend mit OX1-OX2 bezeichnet) ein nicht leitfähiges, strukturgebendes anorganischen Oxid mit hoher spezifischer Oberfläche, das mit einer elektrisch leitfähigen, oxidischen Komponente beschichtet ist. Vorzugsweise sind das strukturgebende anorganische Oxid sowie die leitfähige Komponente säureresistent, d.h. in den in der PEM-Brennstoffzelle herrschenden Betriebsbedingungen stabil.

Die erfindungsgemäßen mehrkomponentigen Trägermaterialien bewirken aufgrund ihrer hohen Trägeroberfläche zugleich auch eine hohe Dispersion der darauf abgeschiedenen Katalysatorpartikel. Dies führt wiederum zu einer hohen katalytisch aktiven Oberfläche des resultierenden Elektrokatalysators.

Die verbesserte Korrosionsbeständigkeit des erfindungsgemäßen Elektrokatalysators wird durch die Verwendung eines leitfähigen oxidischen Trägers als Basismaterial erhalten, der aufgrund seines feinteiligen Aufbaus eine feine Verteilung (d.h. hohe Dispersion) der katalytisch aktiven platinhaltigen Partikel ermöglicht. Im Vergleich zu konventionellen Elektrokatalysatoren mit C-haltigen Trägern findet keine Korrosion des Kohlenstoffträgers statt. Die erfindungsgemäßen Elektrokatalysatoren sind C-frei und weisen keinen Kohlenstoff auf.

Die Erfindung betrifft also einen Elektrokatalysator für Brennstoffzellen enthaltend einen elektrisch leitfähigen Träger sowie eine katalytisch aktive Spezies, wobei der leitfähige Träger ein anorganisches, mehrkomponentiges Trägermaterial der Zusammensetzung OX1-OX2 ist, worin
- OX1 =: ein Oxid mit einer spezifischen Oberfläche (BET) im Bereich von 50 bis 400 m²/g und
- OX2 =: ein leitfähiges Oxid bedeutet.

Das mehrkomponentige Trägermaterial OX1-OX2 weist eine elektrische Leitfähigkeit im Bereich > 0.01 S/cm, vorzugsweise >0.1 S/cm und besonders bevorzugt im Bereich >1 S/cm auf.

Das anorganische Oxid OX1 ist nicht elektrisch leitfähig, das heißt, ein Isolator. Typischerweise besitzt das anorganische Oxid OX1 eine elektrische Leitfähigkeit von <10⁻⁴ S/cm.

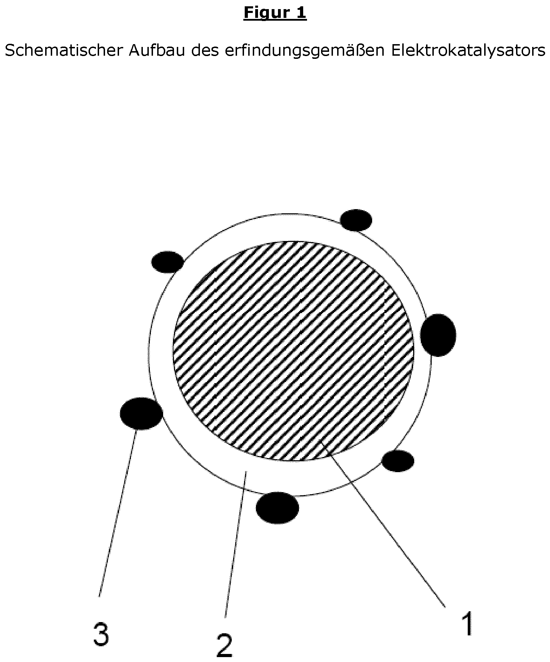

Der schematische Aufbau des erfindungsgemäßen Elektrokatalysators ist in **Figur 1** dargestellt. Auf einer strukturgebenden, elektrisch nicht leitfähigen Oxidkomponente OX1 (1) ist eine elektrisch leitfähige Schicht aus einer elektrisch leitfähigen Oxidkomponente OX2 (2) aufgebracht. Auf der leitfähigen, oxidischen Komponente OX2 sind die katalytisch aktiven Partikel P (3) aufgebracht.

Obwohl die Schicht der leitfähigen Oxidkomponente OX2 in **Figur 1** schematisch als kontinuierliche Schicht dargestellt ist, muss sie in Wirklichkeit nicht zusammenhängend sein und muss den Kernpartikel nicht vollständig umhüllen. Es ist ausreichend, wenn die leitfähigen Oxidkomponente OX2 ein elektrisch leitfähiges Netzwerk in der katalysatorhaltigen Schicht generiert und so eine hinreichende elektrische Leitfähigkeit sicherstellt (beispielsweise durch Percolation bzw. Partikel-Partikel-Kontakt innerhalb des Trägermaterials). Erfindungsgemäß weist das mehrkomponentige leitfähige Trägermaterial eine Kern/Schale-Struktur ("core/shell" Struktur) auf. Dabei ist auf den nicht leitfähigen Kern OX1 die leitfähige Komponente OX2 in Form einer Schale aufgebracht. Diese Schale kann kontinuierlich ausgeformt sein, sie kann aber auch diskontinuierlich sein und Unterbrechungen, Löcher ("pinholes"), Lücken, Agglomerate und Fehlstellen aufweisen.

Der erfindungsgemäße Elektrokatalysator enthält im Wesentlichen Partikel, die nach diesem Prinzip aufgebaut sind; der erfindungsgemäße Katalysator kann jedoch auch Anteile an nicht umhülltem Kernmaterial OX1, Anteile an elektrisch leitfähiger, oxidischer Komponente OX2, sowie isolierte katalytisch aktive Spezies (d.h. edelmetallhaltige Partikel P oder Agglomerate) enthalten. Diese Ausführungsformen des Elektrokatalysators sind von der vorliegenden Erfindung mit umfasst.

Das Trägermaterial des erfindungsgemäßen Katalysators enthält ein elektrisch nicht leitfähiges, strukturgebendes anorganisches Oxid OX1. Als anorganisches Oxid kommen im Allgemeinen inerte, säurebeständige Oxide der Hauptgruppen- und Nebengruppenelemente zum Einsatz. Bevorzugt ist das nicht leitfähige anorganische Oxid OX1 ausgewählt aus der Gruppe Titanoxid (TiO₂), Aluminiumoxid (Al₂O₃), Siliziumdioxid (SiO₂), Zirkondioxid (ZrO₂), Yttriumoxid (Y₂O₃), Ceroxid (Ce₂O₃), Cerdioxid (CeO₂), Lanthanoxid (La₂O₃) und Zinndioxid (SnO₂) sowie Mischungen und Kombinationen davon. Zusätzlich können zur Stabilisierung auch andere Oxide, beispielsweise Oxide der Unedelmetalle oder der Lanthaniden enthalten sein.

Zur Erreichung der strukturgebenden Eigenschaften sollte das nicht leitfähige Oxid eine hohe spezifische Oberfläche (nach BET) aufweisen. Diese hohe Oberfläche liegt erfindungsgemäß im Bereich von 50 bis 400 m²/g, vorzugsweise im Bereich von 100 bis 350 m²/g. Geeignete Beispiele für anorganische Oxide sind hochoberflächige pyrogene Oxide wie TiO₂, Al₂O₃ oder SiO₂. Solche pyrogenen Oxide werden beispielsweise unter dem Namen Aerosil® oder TiO₂-Typ P25® von Evonik-Degussa vertrieben. Ein ebenfalls verwendbares TiO₂-Material ist eine Anatas-Modifikation und wird von der Sachtleben-Chemie (Duisburg) unter dem Produktnamen "Hombikat" vertrieben.

Das strukturgebende anorganische Oxide OX1 sollte chemisch inert sein und eine sehr geringe Säurelöslichkeit aufweisen. Die bedeutet, dass der Gewichtverlust bei einer Behandlung mit Mineralsäuren (z.B. in 1 molarer Schwefelsäure) minimal ist.

Das strukturgebende anorganische Oxid OX1 ist in einer Menge von 1 bis 90 Gew.-%, vorzugsweise 5 bis 80 Gew.-% bezogen auf das Gesamtgewicht des mehrkomponentigen Trägermaterials in dem erfindungsgemäßen Elektrokatalysator enthalten.

Das strukturgebende anorganische Oxid OX1 ist an seiner Oberfläche mit einem leitfähigen Oxid belegt bzw. beschichtet, welches die elektrische Leitfähigkeit des Trägermaterials bewirkt. Das leitfähige Oxid OX2 enthält im Wesentlichen ein leitfähiges Oxid eines Edel- oder Nichtedelmetalles. Vorzugsweise ist das das leitfähige Oxid OX2 ausgewählt aus der Gruppe Ruthenium(IV)-oxid (RuO₂), Iridium(IV)-oxid (IrO₂), Wolframoxid (WOₓ), Molybdänoxid (MoOₓ), Nioboxid (NbOₓ), Tantaloxid (TaOₓ), Zinnoxid (SnOₓ), reduziertes Titanoxid (TiOₓ) sowie Mischungen und Kombinationen davon. Die Angabe "x" soll dabei die nichtstöchiometrische Zusammensetzung des leitfähigen Oxides verdeutlichen.

Zur Stabilisierung und Einstellung der leitfähigen Eigenschaften kann das leitfähige Oxid noch weitere Dotierungen, beispielsweise mit den Metallen Vanadium, Niob, Tantal oder Antimon oder den Halogenidionen F⁻ oder Cl⁻ sowie Mischungen und Kombinationen davon aufweisen.

Das leitfähige Oxid OX2 liegt in Mengen von 10 bis 99 Gew.-%, vorzugsweise in Mengen von 20 bis 95 Gew.-% im Trägermaterial vor (bezogen auf das Gewicht des mehrkomponentigen Trägermaterials). Je nach der spezifischen Oberfläche des eingesetzten strukturgebenden Oxides OX1 wird die Menge des leitfähigen Oxides OX2 so gewählt, dass eine ausreichende elektrische Leitfähigkeit des resultierenden Trägermaterials sichergestellt wird. Die elektrische Leitfähigkeit des mehrkomponentigen Trägermaterials OX1-OX2 liegt im Bereich von >0.01 S/cm, vorzugsweise >0.1 S/cm und besonders bevorzugt >1 S/cm (gemessen nach der Pulvermethode). Es hat sich überraschenderweise gezeigt, dass Leitfähigkeitswerte in diesem Bereich für die Verwendung als Träger in Elektrokatalysatoren geeignet sind. Trägermaterialien mit geringerer elektrischer Leitfähigkeit führen zu hohen Widerständen in der Katalysatorschicht und damit zu erheblichen Leistungsverlusten der PEM-Brennstoffzelle.

Das oxidische Material des Typs OX1-OX2 dient als Trägermaterial für die erfindungsgemäßen Elektrokatalysatoren. Das mehrkomponentige Trägermaterial kann neben den Komponenten OX1 und OX2 noch weitere oxidische oder nicht-oxidische Komponenten (z.B. OX1', OX2', Carbide, Nitride etc.) enthalten. Auch solche Ausführungsformen sind in der vorliegenden Erfindung umfasst.

In einem Folgeschritt wird auf das anorganische Trägermaterial OX1-OX2 die katalytisch aktive Spezies in Form von feinen Partikeln (P) aufgebracht. Als katalytisch aktive Spezies werden in der Regel Edelmetalle eingesetzt. Insbesondere kommen die Edelmetalle Ruthenium, Osmium, Rhodium, Iridium, Palladium, Platin sowie Silber und Gold sowie deren Gemische und Legierungen zum Einsatz. Vorzugsweise werden die Elemente der Platingruppenmetalle ("PGMs") verwendet, hierzu gehören die Edelmetalle Ruthenium, Osmium, Rhodium, Iridium, Palladium und Platin sowie deren Gemische und Legierungen. Ganz besonders bevorzugt wird das Edelmetall Platin (Pt) verwendet.

In einer besonderen Ausführungsform können als katalytisch aktive Partikel edelmetallhaltige Legierungspartikel eingesetzt werden. Solche Legierungen umfassen Legierungen der Edelmetalle untereinander (beispielsweise Platin/Ruthenium oder Platin/Gold) oder solche mit Nichtedelmetallen aus der Gruppe Vanadium, Chrom, Mangan, Eisen, Kobalt, Nickel und Kupfer und Zink. Bevorzugte Legierungen aus dieser Gruppe sind beispielsweise Platin/Nickel, Platin/Kobalt, Platin/Kupfer oder ternäre Legierungen wie beispielsweise Platin/Palladium/Kobalt, Platin/Iridium/Cobalt, Platin/Palladium/Nickel, Platin/Iridium/Nickel sowie Platin/Kobalt/Chrom.

In den erfindungsgemäßen Elektrokatalysatoren liegt der Gehalt an katalytisch aktiver Spezies (d.h. Edelmetall, ggf mit Legierungselementen) zwischen 5 bis 60 Gew.-%, vorzugsweise zwischen 5 und 40 Gew.-% (jeweils bezogen auf das Gesamtgewicht des Elektrokatalysators).

Die mittlere Partikelgröße der edelmetallhaltigen Partikel P auf dem leitfähigen anorganischen Trägermaterial liegt im Bereich von 1 bis 100 nm, vorzugsweise 1,5 bis 50 nm, gemessen mittels Röntgendiffraktometrie (XRD).

Die Herstellung der erfindungsgemäßen Elektrokatalysatoren ist ebenfalls Gegenstand der vorliegenden Erfindung. Das erfindungsgemäße Herstellverfahren umfasst die allgemeinen Schritte
a) Beschichtung des Oxids OX1 mit dem leitfähigen Oxid OX2 durch Fällung oder Imprägnierung mit geeigneten OX2-Precursorverbindungen, optional gefolgt von einem Trocknungs- und/oder Kalzinierung des resultierenden leitfähigen Trägers OX1-OX2,
b) Abscheidung der katalytisch aktiven Spezies auf dem Träger OX1-OX2 durch Fällung oder Imprägnierung mit geeigneten Metall-Precursorverbindungen, optional gefolgt von Reduktion und/oder Trocknung und/oder Kalzination.
Nachfolgend werden diese Verfahrensschritte näher erläutert.

Schritt a): Beschichtung des strukturgebenden Oxids OX1 mit dem leitfähigen Oxid OX2 durch Fällung aus oder Imprägnierung mit geeigneten Precursorverbindungen, optional gefolgt von einem Trocknungs- und/oder Kalzinierungsschritt. In einem typischen Herstellungsprozess auf der Basis der EP1701790B1 wird das anorganische, hochoberflächige Oxid vollständig in einer wässerigen Lösung dispergiert. Dann wird eine Lösung aus einer OX2-Precursorverbindung (im Falle der Verwendung von IrO₂ als leitfähigem Oxid beispielsweise Hexachloroiridium(IV)-säure, Iridium(III)-chlorid, Iridiumnitrat usw.) hinzugefügt. Die Suspension wird dann auf 70 bis 100°C erhitzt, und IrO₂ wird anschließend durch kontrolliertes Hinzufügen von Alkalilauge ausgefällt, wobei der pH-Wert innerhalb eines Bereichs von 6 bis 10 einzustellen ist. Nach dem Filtrieren und Waschen wird das so hergestellte Trägermaterial getrocknet und optional kalziniert. Eine solche Temperaturbehandlung kann in der Regel bei Temperaturen im Bereich von 300 bis 800°C, ggf. unter Inertgasatmosphäre durchgeführt werden.

Für die Herstellung von Trägermaterialien, die andere leitfähige Oxide enthalten, wird das oben angegebene Verfahren modifiziert. Geeignete OX2-Precursor- bzw. Ausgangsverbindungen werden zusammen der Suspension des anorganischen Oxids OX1 in Wasser hinzugefügt. Geeignete OX2-Precursorverbindungen für die Herstellung der leitfähigen Oxide des Typs sind beispielsweise:
- für Ir-oxid:: Hexachloroiridium(IV)-säure, Iridium(III)-chlorid, Iridium(III)-nitrat
- Für Ru-oxid: Ru(III)-nitrosylnitrat, Ru(III)-acetat, Ru(III)-acetylacetonat, etc
- für Sb/Sn-oxid:: SnCl₄ x 5H₂O, Sn-Acetat, Zinn(II)-nitrat, SbCl₃, Antimon(III)-nitrat, Antimon(III)-acetat, etc.
- für Mo-oxid:: Ammoniummolybdat ([NH₄]₂MoO₄), Natriummolybdat
- für W-oxid:: Ammoniumwolframat ([NH₄]₂WO₄), Natriumwolframat
- für V-oxid:: Ammoniumvanadat ([NH₄]VO₃), Natriumvanadat
- für Nb-oxid:: Ammoniumniob(V)-oxalat
- für Tantaloxid:: Ammoniumtantal(V)-oxalat

Entsprechende OX2-Precursorverbindungen für andere leitfähige Oxide sind dem Fachmann bekannt.

Das erfindungsgemäße Verfahren kann im großtechnischen Maßstab ohne Probleme in einem Batchprozess durchgeführt werden. Die nachfolgende Beschichtung mit katalytisch aktiver Spezies (Schritt b)) kann direkt im Anschluss (d.h. in einem "Eintopfverfahren") oder in einem separaten Verfahren durchgeführt werden.

Schritt b): Abscheidung der katalytisch aktiven Spezies (d.h. der Edelmetall- oder Edelmetall-Legierungspartikel) auf dem Träger durch Fällung oder Imprägnierung mit geeigneten, vorzugsweise chloridfreien Metall-Precursorverbindungen, optional gefolgt von Reduktion und/oder Trocknung.

Geeignete Reduktionsmittel für das erfindungsgemäße Verfahren sind solche, die sich beim Reduktionsprozess rückstandsfrei zersetzen oder keine störenden ionischen oder organischen Verunreinigungen hinterlassen. Beispiele hierfür sind Wasserstoff, Hydrazin, Formaldehyd, Ameisensäure aber auch niedere aliphatische Alkohole wie Ethanol oder Isopropanol. Das Reduktionsmittel wird unter Rühren direkt zur Reaktionslösung gegeben, wobei Temperaturen im Bereich von Raumtemperatur (d.h. 25°C) bis 100°C eingestellt werden.

Als Metall-Precursorverbindungen können grundsätzlich Edelmetall-Precursorverbindungen (EM-Precursoren) sowie (z.B. bei einer Legierungsabscheidung) Nichtedelmetall-Precursorverbindungen verwendet werden. Im Falle der Edelmetall-Precursorverbindungen können beispielsweise die folgenden halogenfreien bzw. halogenarmen Verbindungen zur Herstellung der katalytisch aktiven Partikel eingesetzt werden:
- für Pt:: Hexahydroxoplatin (IV)-säure, Ethylammonium-Hexahydroxyplatinat, Tetramminplatin (II) nitrat, Platin (IV) nitrat, Tetramminplatin-(II)-hydrogencarbonat Tetramminplatin-(II)-hydroxid, Bis-(Ethanolamin)Pt(IV)(OH)₆
- für Pd:: Tetraamminpalladium (II) nitrat Palladium(II) nitrat, Palladium (II) sulfat-hydrat etc

Entsprechende Verbindungen können auch für die Edelmetalle Au, Ag, Ir und Os eingesetzt werden.

Als Precursorverbindungen für die oben genannten Nichtedelmetalle setzt man die jeweiligen chlorfreien Salze der Metalle, bevorzugt die Nitratverbindungen, ein. Beispiele sind Co(II)-carbonat, Nickel(II)-nitrat, Ni(II)-Bis-hydrogencarbonat etc.

Während der Zugabe der Precursorverbindungen sollte der pH-Wert der Reaktionslösung in geeigneten Bereichen gehalten werden. Dies kann durch die Zugabe von Pufferkomponenten erreicht werden. Die Abscheidung der katalytisch aktiven Partikel erfolgt in der Regel bei Temperaturen von 25 bis 100°C. Entsprechende Verfahren sind dem Fachmann bekannt.

Nach der Abscheidung von Edelmetall- bzw. Edelmetall-Legierungspartikeln wird der resultierende Elektrokatalysator getrocknet. Die Trocknung erfolgt dabei vorzugsweise im Bereich von 50 bis 100°C, optional unter Schutzgasatmosphäre.

In bestimmten Fällen (z.B. zur Legierungsbildung) kann eine Temperaturbehandlung (Temperung) erforderlich sein. Eine solche Temperaturbehandlung wird in der Regel bei Temperaturen im Bereich von 300 bis 800°C, ggf. unter Inertgasatmosphäre durchgeführt. Die Wärmebehandlung wird im technischen Maßstab in geeigneten Chargen- oder Förderbandöfen vorgenommen, vorzugsweise im Bereich von 300 bis 500°C.

Die mittlere Partikelgröße der edelmetallhaltigen Partikel P auf dem leitfähigen mehrkomponentigen Trägermaterial OX1-OX2 liegt im Bereich von 1 bis 100 nm, vorzugsweise im Bereich von 1,5 bis 50 nm, gemessen mittels Röntgendiffraktometrie (XRD).

Die erfindungsgemäßen Elektrokatalysatoren finden Verwendung in elektrochemischen Vorrichtungen wie PEM-Brennstoffzellen, Direktmethanol-Brennstoffzellen (DMFC), reversiblen Brennstoffzellen oder Elektrolyseuren.

Die erfindungsgemäßen Elektrokatalysatoren weisen eine elektrochemische Oberfläche (ECA) von 20 bis 120 m²/g, vorzugsweise 25 bis 100 m²/g auf. Sie zeigen damit beispielsweise in der PEM-Brennstoffzelle eine hohe Aktivität, sowohl als Anodenkatalysatoren als auch als Kathodenkatalysatoren. Bevorzugt werden die erfindungsgemäßen Materialien als Kathodenkatalysatoren in PEM-Brennstoffzellen eingesetzt.

Typische Beispiele der erfindungsgemäßen Elektrokatalysatoren sind Pt/IrOₓ-TiO₂, PtCO/IrOₓ-TiO₂, Pt/IrOₓ-Al₂O₃, Pt/SbSnOₓ-TiO₂, PtNi/SbSnOₓ-Al₂O₃ , Pt/TaSnOₓ-TiO₂, Pt/NbSnOₓ-TiO₂ oder Pt/NbTiOₓ-TiO₂ usw.

Die Korrosionsstabilität der erfindungsgemäßen Elektrokatalysatoren ist im Vergleich zum Stand der Technik (d.h. der C-geträgerten Elektrokatalysatoren) deutlich erhöht, was sich positiv auf den Langzeiteinsatz im Automobil auswirkt und den Leistungserhalt der PEM-Brennstoffzelle über die gesamte Betriebszeit sicherstellt. Auch im Vergleich zu graphitierten Rußträgern (C_{graph}) wird eine verbesserte Korrosionsstabilität beobachtet (Vgl Vergleichsbeispiele, Tabelle 1).

Für die Herstellung von Elektroden, katalysatorbeschichteten Membranen (CCMs) und Membran-Elektroden-Einheiten (MEEs) für PEM-Brennstoffzellen werden die erfindungsgemäßen Elektrokatalysatoren zu Tinten oder Pasten verarbeitet, und zwar unter Verwendung geeigneter Lösungsmittel und ggf. unter Zusatz von Ionomermaterialien. Die Katalysatortinten werden auf Gasdiffusionssubstraten (GDLs), Stromkollektoren, Ionomermembranen, vorgeformten PTFE-Folien, Abziehbildern (sog. "Release papers") oder Separatorplatten und ähnlichem abgeschieden, wobei Verfahren wie Sprühen, Drucken, Rakeln oder sonstige Beschichtungsprozesse verwendet werden können. Entsprechende Verfahren sind dem Fachmann bekannt.

Die Erfindung wird durch die nachfolgenden Beispiele näher erläutert, ohne jedoch darauf eingeschränkt zu sein.

### Beispiele

### Allgemeine Vorbemerkungen

Die Messungen der spezifischen Oberfläche werden nach Brunauer, Emmett und Teller (BET) mittels der Stickstoffadsorptionsmethode durchgeführt. Mittlere Partikelgrößen der EM-Partikel werden mittels Röntgendiffraktometrie (XRD) bestimmt.

Die elektrische Leitfähigkeit der Trägermaterialien wird mit einem Pulver-Widerstands-Messsystem (Typ Loresta) von Mitsubishi Chemical (Japan) mit einer 4-Punkt-Probe (3,0 mm Elektrodenabstand, 0,7 mm Elektrodenradius) bestimmt. Dazu wird das zu messende Pulver in einen Probehalter (Radius 10,0 mm, Probenmenge zwischen 0,7 and 5,9 g) eingefüllt und unter steigendem Druck (0 MPa bis 50 MPa) vermessen. Es wird der Wert bei 50 MPa angegeben.

### Elektrochemische Messungen

Alle elektrochemischen Messungen werden im flüssigen Elektrolyten (0,1 mol/L Perchlorsäure) durchgeführt. Die Katalysatorproben werden in ultrareinem Wasser dispergiert und auf Elektroden aus Glaskohlenstoff (ECA und ORR) bzw. Gold (Korrosionstest) fixiert. Als Gegenelektrode wird ein Platindraht verwendet, als Referenzelektrode dient Hg/Hg₂SO₄.

Die elektrochemische Oberfläche der Katalysatoren (ECA) wird mittels Cyclovoltammetrie bei Raumtemperatur bestimmt. Die Scanrate beträgt 20 mV/s. Um quasi-stationäre Bedingungen zu erhalten, wird der dritte Zyklus nach 40 Konditionierungszyklen zwischen 0 und 1,1 V gegen RHE (RHE = reversible hydrogen electrode) verwendet. Ausgewertet wird der Wasserstoffadsorptionsbereich.

Die Sauerstoffreduktionsaktivität (ORR) wird mittels rotierender Scheibenelektrode (RDE) bestimmt. Der Elektrolyt wird bei 0,3 V gegen RHE mit Sauerstoff gesättigt und dann zwischen 0 und 1,1 V gegen RHE mit 20 mV/s auf- und abgefahren. Nach dem Einlaufen werden zwei Messzyklen mit einer Scanrate von 20 mV/s aufgenommen. Ausgewertet wird die Massenaktivität (in mA/mg_{Pt}) bei 0,9 V gegen RHE.

Die Korrosionsstabilität der Katalysatoren wird durch zweistündiges Halten eines hohen Potentials 1,5 V gegen RHE bei 60°C bestimmt. Zunächst werden bei Raumtemperatur 43 Zyklen zwischen 0 und 1,1 V gegen RHE durchgeführt und 3 Zyklen zwischen 0 und 1,5 V gegen RHE aufgenommen. Nach Aufheizen auf 60°C werden drei Messzyklen zwischen 0 und 1,1 V (BOL = begin of life) und drei Zyklen zwischen 0 und 1,5 V gegen RHE aufgenommen. Nach 2h Haltezeit bei 1,5 V und 60°C werden erneut drei Messzyklen zwischen 0 und 1,1 V gegen RHE aufgenommen (EOL = end of life). Der ECA-Verlust wird aus der Differenz der ECA-Werte aus dem jeweils dritten Zyklus von BOL- und EOL-Messung bestimmt und in % zum Ausgangswert (BOL) angegeben (vgl Tabelle 1).

### Beispiel 1

### 10 Gew.-% Platin auf IrO₂-TiO₂

### a) Herstellung des leitfähigen Trägermaterials

Das IrOₓ-TiO₂-Trägermaterial wird nach der im Patent EP1701790B1 beschriebenen Methode durch Fällung von Hexachloroiridiumsäure-Lösung (H₂IrCl₆, 20,5 Gew.-% Ir; Umicore, Hanau) mit NaOH auf Titandioxid (Hombikat, Sachtleben Chemie GmbH; BET > 300 m²/g) hergestellt. 7,49 g Titandioxid werden in 5,5 I vollentsalztem Wasser (VE-Wasser) suspendiert. Dazu werden 124,1 g Hexachloroiridiumsäure-Lösung (H₂IrCl₆, 20,5 Gew.-% Ir; Umicore, Hanau/DE) verdünnt mit 200 ml VE-Wasser zugegeben. Die Suspension wird auf 70 bis 90°C erhitzt. Dann werden 288 ml NaOH-Lösung (80 g NaOH in 500 ml VE-Wasser) zugegeben und die Suspension mit VE-Wasser auf 8 I aufgefüllt. Nach 4-stündigem Rühren bei 70°C wird mit 20%-iger HCl auf pH 7,5 titriert und 1 h bei 70 bis 90°C nachgerührt. Danach wird abfiltriert. Der Filterkuchen wird mit 0,5%-iger Essigsäure und VE-Wasser gewaschen und anschließend im Trockenschrank getrocknet gefolgt von Kalzinierung bei 400°C in einem Rohrofen.
Das Trägermaterial besitzt folgende Eigenschaften:

| | |
|---|---|
| Gehalt an TiO₂: | 22,9 Gew.-% |
| Gehalt an IrO₂: | 77,1 Gew.-% |
| Spezifische Oberfläche (BET): | 24 m²/g |
| elektrische Leitfähigkeit: | 80 S/cm (bei 50 MPa) |

### b) Abscheidung der edelmetallhaltigen Partikel

Zur Abscheidung der Pt-Partikel werden 4,5 g IrOₓ-TiO₂-Trägermaterial (hergestellt in Schritt a) in 400 ml vollentsalztem Wasser (VE-Wasser) dispergiert, auf 80°C erhitzt und tropfenweise mit 5,93 g einer Lösung von Bis-(Ethanolamin)Pt(IV)(OH)₆ (9,26 Gew.-% Pt; Umicore, Hanau) versetzt. Danach werden ca. 3,6 ml einer Pufferlösung (hergestellt aus 108,8 g Natriumacetat-Trihydrat, 252,2 g Essigsäure (100%) und 4,64 I VE Wasser) zugeben um einen pH-Wert von 5 zu erreichen.

Anschließend werden 4,72 ml 5%-ige Ameisensäure innerhalb einer Stunde zugetropft. Die Lösung wird abfiltriert und der Filterkuchen mit 750 ml VE-Wasser gewaschen und dann bei Raumtemperatur an Luft getrocknet. Es werden 4,92 g Produkt erhalten. Die mittlere Partikelgröße der Pt-Partikel liegt bei 2 nm (gemessen mit XRD).

### Beispiel 2

### 10 Gew.-% Pt auf IrO₂-Al₂O₃

### a) Herstellung des leitfähigen Trägermaterials

21,24 g (Trockenmasse) Aluminiumoxid (Puralox SCFa-140, Sasol Germany GmbH, Brunsbuettel; BET = 141 m²/g) werden in 5,5 I vollentsalztem Wasser (VE-Wasser) suspendiert. Dazu werden 124,1 g Hexachloroiridiumsäure-Lösung (H₂IrCl₆, 20,5 Gew.-% Ir; Umicore, Hanau/Germany) verdünnt mit 200 ml VE-Wasser zugegeben. Die Suspension wird auf 70°C erhitzt. Dann werden 288 ml NaOH-Lösung (80 g NaOH in 500 ml VE-Wasser) zugegeben und die Suspension mit VE-Wasser auf 8 I aufgefüllt. Nach 4-stündigem Rühren bei 70°C wird mit 20%-iger HCl auf pH 7,5 titriert und 1 h bei 70°C nachgerührt. Danach wird abfiltriert. Der Filterkuchen wird mit 0,5%-iger Essigsäure und VE-Wasser gewaschen und anschließend im Trockenschrank getrocknet gefolgt von Kalzinierung bei 400°C in einem Rohrofen.
Das Trägermaterial besitzt folgende Eigenschaften:

| | |
|---|---|
| Gehalt an IrO₂: | 53,8 Gew.-% |
| Gehalt an Al₂O₃: | 46,2 Gew.-% Al₂O₃ |
| Spezifische Oberfläche (BET): | 100 m²/g |
| elektrische Leitfähigkeit: | 12,1 S/cm (bei 50 MPa) |

### b) Abscheidung der Pt-Partikel

Zur Abscheidung der Pt-Partikel werden 1,71 g Träger (100 m²/g BET) in 400 ml vollentsalztem Wasser (VE-Wasser) dispergiert, auf 80°C erhitzt und tropfenweise mit 2,02 g Bis-(Ethanolamin)Pt(IV)(OH)₆ (9,41 Gew.-% Pt; Umicore, Hanau) versetzt. Danach werden 1,125 ml Pufferlösung (Natriumacetat/Essigsäure, s. Bsp.1) zugeben um einen pH-Wert von 5 zu erreichen. Anschließend werden 1,79 ml 5%ige Ameisensäure innerhalb einer Stunde zugetropft. Die Lösung wird abfiltriert und der Filterkuchen mit 500 ml VE-Wasser gewaschen und dann bei Raumtemperatur an Luft getrocknet. Das erhaltenen Produkt zeigt eine bessere Sauerstoffreduktionsaktivität (ORR) als ein rußgeträgerter Platinkatalysator (vgl. Tabelle 1).

### Beispiel 3

### 10 Gew.-% Pt auf Sb/SnOₓ-TiO₂

### a) Herstellung des leitfähigen Trägermaterials

Zu 238,6 g SnCl₄·x 5H₂O (Sigma-Aldrich) werden 17,25 g SbCl₃ (Merck) und 1,0 I von einer mit VE-Wasser auf 18%(m/m) verdünnten HCl-Lösung (37%, Merck) gegeben um eine Sb/Sn-Lösung der molaren Zusammensetzung 1:9 zu erhalten. Titandioxid (Hombikat, Sachtleben) wird bei 400°C in Luft vorkalziniert. 12,3 g davon (BET 130 m²/g) werden in 1 I VE-Wasser dispergiert und mit einer Lösung von 953,7 g 25%-iger Ammoniaklösung (Merck) in 2 I VE-Wasser auf pH = 7 titriert. Unter Konstanthalten des pH-Wertes wird die Sb/Sn-Lösung unter Rühren zugegeben. Nach 15-minütigem Nachrühren wird der Feststoff abfiltriert und mit VE-Wasser gewaschen, anschließend im Trockenschrank getrocknet und bei 500°C an Luft kalziniert.
Das Trägermaterial besitzt folgende Eigenschaften:

| | |
|---|---|
| Gehalt an Sb/SnOₓ: | 95,0 Gew.-% |
| Gehalt an TiO₂: | 5 Gew.-% |
| Spezifische Oberfläche (BET): | 78 m²/g |
| elektrische Leitfähigkeit: | ca. 1,2 S/cm (bei 50 MPa) |

### b) Abscheidung der Pt-Partikel

Zur Abscheidung der Pt-Partikel werden 6,75 g (Trockenmasse) des erhaltenen Feststoffs in 600 ml VE-Wasser dispergiert, auf 80°C erhitzt und tropfenweise mit 7,78 g Bis-(Ethanolamin)Pt(IV)(OH)₆ (9,63 Gew.-% Pt; Umicore, Hanau) versetzt. Danach werden 36 ml Pufferlösung (Natriumacetat/Essigsäure, s. Bsp.1) zugeben um einen pH-Wert von 5 zu erreichen. Anschließend werden 7,08 ml 5%-ige Ameisensäure innerhalb einer Stunde zugetropft. Die Lösung wird abfiltriert und der Filterkuchen mit essigsaurem Wasser gewaschen und dann bei 100°C im Vakuum getrocknet. Die mittlere Partikelgröße der Pt-Partikel liegt bei 4 nm (gemessen mit XRD).

### Vergleichsbeispiel 1 (VB1)

### 50 Gew.-% Platin auf graphitiertem Ruß (C_{graph})

150 g Trägermaterial (C_{graph}, durch Graphitisierung stabilisierter Ruß, BET 80 m²/g, el. Leitfähigkeit 19,3 S/cm; Evonik-Degussa) werden in 18 I vollentsalztem Wasser (VE-Wasser) dispergiert und auf 80°C erhitzt. 1529,1 g einer Lösung von Bis-(Ethanolamin)Pt(IV)(OH)₆ (9,81 Gew.-% Pt; Umicore, Hanau) werden mit VE-Wasser auf 1000 ml aufgefüllt und zur Trägerdispersion zudosiert. Danach werden 1508,5 g Pufferlösung (Natriumacetat/Essigsäure, s. Beispiel 1) zugeben um einen pH-Wert von 5 zu erreichen. Anschließend werden 70,75 g Ameisensäure (98-100%, Merck, Darmstadt) auf 1000 ml aufgefüllt und innerhalb einer Stunde zur Dispersion zugetropft. Die Lösung wird abfiltriert und der Filterkuchen mit VE-Wasser gewaschen und dann bei 100°C im Vakuum getrocknet. Es werden 306,9 g Produkt erhalten. Die mittlere Partikelgröße der Pt-Partikel liegt bei 7 nm (gemessen mit XRD)

### Vergleichsbeispiel 2 (VB2)

### 20 Gew.-% Platin auf graphitiertem Ruß (C_{graph})

240 g Trägermaterial (C_{graph}, BET 80 m²/g, Evonik-Degussa) werden in ca. 17 I vollentsalztem Wasser (VE-Wasser) dispergiert und auf 80°C erhitzt. 631 g einer Lösung von Bis-(Ethanolamin)Pt(IV)(OH)₆ (9,51 Gew.-% Pt; Umicore, Hanau) werden mit VE-Wasser auf 1000 ml aufgefüllt und zur Trägerdispersion zudosiert. Danach werden 1143,8 g Pufferlösung (Natriumacetat/Essigsäure, s. Beispiel 1) zugeben um einen pH-Wert von 5 zu erreichen. Anschließend werden 28,3 g Ameisensäure (98-100%, Merck, Darmstadt) auf 1000 ml aufgefüllt und innerhalb einer Stunde zur Dispersion zugetropft. Die Lösung wird abfiltriert und der Filterkuchen mit VE-Wasser gewaschen und dann bei 100°C im Vakuum getrocknet. Es werden 308 g Produkt erhalten. Die mittlere Partikelgröße der Pt-Partikel liegt bei 4 nm (gemessen mit XRD).

### Elektrochemische Messungen

Die Sauerstoffreduktionsaktivität (ORR) und die Stabilität der elektrochemischen Oberfläche (ECA) bei einem oxidierenden Potential von 1,4 V sind in Tabelle 1 zusammengefasst und mit den Ergebnissen zweier auf graphitiertem Ruß (C_{graph}) geträgerten Platinkatalysatoren verglichen (VB1, VB2). Dabei zeigt sich, dass die erfindungsgemäßen Elektrokatalysatoren gemäß der Beispiele 1 bis 3 eine hohe elektrochemische Oberfläche (ECA) und Sauerstoffreduktionsaktivität (ORR) besitzen.

Darüber hinaus weisen sie bei gleicher oder sogar besserer Aktivität eine deutlich höhere Korrosionsstabilität auf. So liegt der ECA-Verlust der erfindungsgemäßen Elektrokatalysatoren im Bereich von 4-6%, während er beim C-haltigen Katalysator aus VB2 bei 11% liegt.

**Tabelle 1**

| Elektrochemische Messergebnisse | | | | |
|---|---|---|---|---|
| Beispiel | ORR 0,9 V vs RHE (mA/mg_{Pt}) | ECA (BOL) (m²/g_{Pt}) | ECA (EOL) (m²/g_{Pt}) | Korr.-Stabilität (ECA-Verlust) (%) |
| 1 | 500 | 82 | 79 | 4 |
| 2 | 450 | 93 | n.a. | n.a. |
| 3 | n.a. | 38 | 36 | 6 |
| VB1 | 320 | 28 | n.a. | n.a. |
| VB2 | 429 | 44 | 39 | 11 |

| | | | | |
|---|---|---|---|---|
| n.a.: nicht analysiert | | | | |

## Patentansprüche

1. Elektrokatalysator für Brennstoffzellen enthaltend einen elektrisch leitfähigen Träger sowie eine katalytisch aktive Spezies, wobei der leitfähige Träger ein anorganisches, mehrkomponentiges Trägermaterial der Zusammensetzung OX1-OX2 ist, worin
- OX1 = ein nicht elektrisch leitfähiges Oxid mit einer spezifischen Oberfläche (BET) im Bereich von 50 bis 400 m²/g und
- OX2 = ein leitfähiges Oxid
bedeutet
und wobei als katalytisch aktive Spezies Edelmetalle aus der Gruppe Ruthenium, Osmium, Rhodium, Iridium, Palladium, Platin, Silber und Gold sowie deren Gemische oder Legierungen verwendet werden
und worin
das mehrkomponentige leitfähige Trägermaterial eine Kern/Schale-Struktur ("core/shell"-Struktur) aufweist, wobei den Kern aus der strukturgebenden, elektrisch nicht leitfähigen Oxidkomponente OX1 eine elektrisch leitfähige Schicht aus einer elektrisch leitfähigen Oxidkomponente OX2 in Form einer Schale aufgebracht ist,
wobei die Schale kontinuierlich ausgeformt oder diskontinuierlich sein kann,
und wobei die Schale Unterbrechungen, Löcher ("pinholes"), Agglomerate und Fehlstellen aufweisen kann,
und wobei das mehrkomponentige Trägermaterial OX1-OX2 eine elektrische Leitfähigkeit im Bereich >0.01 S/cm aufweist,
und worin die katalytisch aktive Spezies als katalytisch aktive Partikel auf der leitfähigen Komponente OX2 aufgebracht sind.

2. Elektrokatalysator nach Anspruch 1, wobei das anorganische Oxid OX1 aus der Gruppe Titanoxid (TiO₂), Aluminiumoxid (Al₂O₃), Siliziumdioxid (SiO₂), Zirkondioxid (ZrO₂), Yttriumoxid (Y₂O₃), Ceroxid (Ce₂O₃), Cerdioxid (CeO₂), Lanthanoxid (La₂O₃), Zinndioxid (SnO₂) sowie Mischungen und Kombinationen davon ausgewählt ist.

3. Elektrokatalysator nach einem der Ansprüche 1 oder 2, wobei das leitfähige Oxid OX2 aus der Gruppe Ruthenium(IV)-dioxid (RuO₂), Iridium(IV)-oxid (IrO₂), Wolframoxid (WOₓ), Molybdänoxid (MoOₓ), Nioboxid (NbOₓ), Tantaloxid (TaOₓ) Zinnoxid (SnOₓ), reduziertes Titanoxid (TiOₓ) sowie Mischungen und Kombinationen davon ausgewählt ist.

4. Elektrokatalysator nach Anspruch 3, wobei das leitfähige Oxid OX2 Zusätze der Elemente Vanadium, Niob, Tantal oder Antimon, Zusätze der Halogenidionen F⁻ oder Cl⁻ sowie Mischungen oder Kombinationen davon enthält.

5. Elektrokatalysator nach einem der Ansprüche 1 bis 4, wobei das leitfähige Oxid OX2 in Anteilen von 10 bis 99 Gew.-%, vorzugsweise in Anteilen von 20 bis 95 Gew.-% (bezogen auf das Gesamtgewicht des Trägermaterials) vorliegt.

6. Elektrokatalysator nach einem der Ansprüche 1 bis 5, wobei als katalytisch aktive Spezies Platin sowie Platin-Legierungen mit den Unedelmetallen der Gruppe Vanadium, Chrom, Mangan, Eisen, Kobalt, Nickel, Kupfer und Zink eingesetzt werden.

7. Elektrokatalysator nach einem der Ansprüche 1 bis 6, wobei die katalytisch aktive Spezies in Form von feinen Partikeln mit einer mittleren Partikelgröße zwischen 1 und 100 nm auf dem Trägermaterial OX1-OX2 vorliegt.

8. Elektrokatalysator nach einem der Ansprüche 1 bis 7 wobei die katalytisch aktive Spezies in Anteilen von 5 bis 60 Gew.-%, vorzugsweise in Anteilen von 5 und 40 Gew.-% (jeweils bezogen auf das Gesamtgewicht des Katalysators) auf dem Trägermaterial OX1-OX2 vorliegt.

9. Elektrokatalysatoren nach Anspruch 1, aufweisend die Zusammensetzung Pt/IrOₓ-TiO₂, PtCo/IrOₓ-TiO₂, Pt/IrOₓ-Al₂O₃, Pt/SbSnOₓ-TiO₂, PtNi/SbSnOₓ-Al₂O₃, Pt/TaSnOₓ-TiO₂, Pt/NbSnOₓ-TiO₂ und Pt/NbTiOₓ-TiO₂.

10. Verfahren zur Herstellung eines Elektrokatalysators enthaltend einen elektrisch leitfähigen Träger sowie eine katalytisch aktive Spezies, wobei der leitfähige Träger ein anorganisches, mehrkomponentiges Trägermaterial der Zusammensetzung OX1-OX2 ist, worin
- OX1 = ein nicht elektrisch leitfähiges Oxid mit einer spezifischen Oberfläche (BET) im Bereich von 50 bis 400 m²/g und
- OX2 = ein leitfähiges Oxid bedeutet,
und wobei als katalytisch aktive Spezies Edelmetalle aus der Gruppe Ruthenium, Osmium, Rhodium, Iridium, Palladium, Platin, Silber und Gold sowie deren Gemische oder Legierungen verwendet werden
und worin
das mehrkomponentige leitfähige Trägermaterial eine Kern/Schale-Struktur ("core/shell"-Struktur) aufweist, wobei den Kern aus der strukturgebenden, elektrisch nicht leitfähigen Oxidkomponente OX1 eine elektrisch leitfähige Schicht aus einer elektrisch leitfähigen Oxidkomponente OX2 in Form einer Schale aufgebracht ist,
wobei die Schale kontinuierlich ausgeformt oder diskontinuierlich sein kann,
und wobei die Schale Unterbrechungen, Löcher ("pinholes"), Agglomerate und Fehlstellen aufweisen kann,
und wobei das mehrkomponentige Trägermaterial OX1-OX2 eine elektrische Leitfähigkeit im Bereich >0.01 S/cm aufweist,
und worin die katalytisch aktive Spezies als katalytisch aktive Partikel auf der leitfähigen Komponente OX2 aufgebracht sind,
umfassend die Schritte
a) Beschichtung des Oxids OX1 mit dem leitfähigen Oxid OX2 durch Fällung oder Imprägnierung mit geeigneten OX2-Precursorverbindungen, optional gefolgt von einem Trocknungs- und/oder Kalzinierung des resultierenden leitfähigen Trägers OX1-OX2,
b) Abscheidung der katalytisch aktiven Spezies auf dem Träger OX1-OX2 durch Fällung oder Imprägnierung mit geeigneten Metall-Precursorverbindungen, optional gefolgt von Reduktion und/oder Trocknung und/oder Kalzination.

11. Verfahren nach Anspruch 10, wobei die OX2-Precursorverbindungen ausgewählt sind aus der Gruppe Hexachloroiridium(IV)-säure, Iridium(III)-chlorid, Iridium(III)-nitrat, Ru(III)-nitrosylnitrat, Ru(III)-acetat, Ru(III)-acetylacetonat, SnCl₄ x 5H₂O, Sn-Acetat, Zinn(II)-nitrat, SbCl₃, Antimon(III)-nitrat, Antimon(III)-acetat, Ammoniummolybdat ([NH₄]₂MoO₄), Natriummolybdat, Ammoniumwolframat ([NH₄]₂WO₄), Natriumwolframat, Ammoniumvanadat ([NH₄]VO₃), Ammoniumniob(V)-oxalat, Ammoniumtantal(V)-oxalat und Natriumvanadat.

12. Verfahren nach Anspruch 11, wobei als Metall-Precursorverbindungen halogenfreie bzw. halogenarme Verbindungen der Edelmetalle und optional der Nichtedelmetalle verwendet werden.

13. Verwendung der Elektrokatalysatoren gemäß einem der Ansprüche 1 bis 9 in elektrochemischen Vorrichtungen wie PEM-Brennstoffzellen, Direktmethanol-Brennstoffzellen (DMFC), reversiblen Brennstoffzellen oder Elektrolyseuren.

## Claims

1. An electrocatalyst for fuel cells comprising an electrically conductive carrier and a catalytically active species, wherein the conductive carrier is an inorganic, multicomponent carrier material of the composition OX1-OX2, wherein
- 0X1 stands for an electrically non-conductive oxide with a specific surface area (BET) in the range of 50 to 400 m²/g and
- OX2 stands for a conductive oxide,
and wherein noble metals from the group consisting of ruthenium, osmium, rhodium, iridium, palladium, platinum, silver and gold and their mixtures or alloys are used as catalytically active species,
and wherein
the multicomponent conductive carrier material has a core/shell structure, wherein an electrically conductive layer made of an electrically conductive oxide component OX2 is applied in the form of a shell to the core consisting of the structure-generating, electrically non-conductive oxide component OX1,
wherein the shell may be continuously formed or discontinuous,
and wherein the shell may have breaks, pinholes, agglomerates and defects, and wherein the multicomponent carrier material OX1-OX2 has an electrical conductivity in the range of >0.01 S/cm,
and wherein the catalytically active species are applied as catalytically active particles on the conductive component OX2.

2. The electrocatalyst according to claim 1, wherein the inorganic oxide 0X1 is selected from the group consisting of titanium oxide (TiO₂), aluminum oxide (Al₂O₃), silicon dioxide (SiO₂), zirconium dioxide (ZrO₂), yttrium oxide (Y₂O₃), cerium oxide (Ce203), ceria (Ce02), lanthanum oxide (La203), tin dioxide (SnO₂) and mixtures and combinations thereof.

3. The electrocatalyst according to any of claims 1 or 2, wherein the conductive oxide OX2 is selected from the group consisting of ruthenium (IV) dioxide (RuO₂), iridium (IV) oxide (IrO₂), tungsten oxide (WOₓ), molybdenum oxide (MoOₓ), niobium oxide (NbOₓ), tantalum oxide (TaOₓ), tin oxide (SnOₓ), reduced titanium oxide (TiOₓ), and mixtures and combinations thereof.

4. The electrocatalyst according to claim 3, wherein the conductive oxide OX2 contains additives of the elements vanadium, niobium, tantalum or antimony, additions of the halide ions F⁻ or Cl⁻ and mixtures or combinations thereof.

5. The electrocatalyst according to any of claims 1 to 4, wherein the conductive oxide OX2 is present in a ratio of 10 to 99 wt.%, preferably in a ratio of 20 to 95 wt.% (based on the total weight of the carrier material).

6. The electrocatalyst according to any of claims 1 to 5, wherein platinum and platinum alloys with the base metals of the group consisting of vanadium, chromium, manganese, iron, cobalt, nickel, copper and zinc are used as catalytically active species.

7. The electrocatalyst according to any of claims 1 to 6, wherein the catalytically active species is present on the carrier material OX1-OX2 in the form of fine particles having an average particle size between 1 and 100 nm.

8. The electrocatalyst according to any of claims 1 to 7, wherein the catalytically active species is present on the carrier material OX1-OX2 in a ratio of 5 to 60 wt.%, preferably in a ratio of 5 and 40 wt.% (each based on the total weight of the catalyst).

9. Electrocatalysts according to claim 1, comprising the composition Pt/IrOₓ-Ti02, PtCo/IrOₓ-TiO₂, Pt/IrOₓ-Al₂O₃, Pt/SbSnOₓ-TiO₂, PtNi/SbSnOₓ-Al₂O₃, Pt/TaSnOₓ-TiO₂, Pt/NbSnOₓ-TiO₂ and Pt/NbTiOₓ-TiO₂.

10. A method for the preparation of an electrocatalyst comprising an electrically conductive carrier and a catalytically active species, wherein the conductive carrier is an inorganic, multicomponent carrier material of the composition OX1-OX2, wherein
- 0X1 stands for an electrically non-conductive oxide with a specific surface area (BET) in the range of 50 to 400 m²/g and
- OX2 stands for a conductive oxide,
and wherein noble metals from the group consisting of ruthenium, osmium, rhodium, iridium, palladium, platinum, silver and gold and their mixtures or alloys are used as catalytically active species,
and wherein
the multicomponent conductive carrier material has a core/shell structure, wherein an electrically conductive layer made of an electrically conductive oxide component OX2 is applied in the form of a shell to the core consisting of the structure-generating, electrically non-conductive oxide component OX1,
wherein the shell may be continuously formed or discontinuous,
and wherein the shell may have breaks, pinholes, agglomerates and defects, and wherein the multicomponent carrier material OX1-OX2 has an electrical conductivity in the range of > 0.01 S/cm,
and wherein the catalytically active species are applied as catalytically active particles on the conductive component OX2,
comprising the steps
a) coating the oxide 0X1 with the conductive oxide OX2 by precipitation or impregnation with suitable OX2 precursor compounds, optionally followed by drying and/or calcination of the resulting conductive carrier OX1-OX2,
b) deposition of the catalytically active species on the carrier OX1-OX2 by precipitation or impregnation with suitable metal precursor compounds, optionally followed by reduction and/or drying and/or calcination.

11. The method according to claim 10, wherein the OX2 precursor compounds are selected from the group consisting of hexachloroiridic (IV) acid, iridium (III) chloride, iridium (III) nitrate, Ru (III) nitrosyl nitrate, Ru (III) acetate, Ru (III) acetylacetonate, SnCl₄ x 5H₂O, Sn acetate, tin (II) nitrate, SbCl₃, antimony (III) nitrate, antimony (III) acetate, ammonium molybdate ([NH₄]₂MoO₄), sodium molybdate, ammonium tungstate ([NH₄]₂WO₄), sodium tungstate, ammonium vanadate ([NH₄]VO₃), ammonium niobium (V) oxalate, ammonium tantalum (V) oxalate and sodium vanadate.

12. The method according to claim 11, wherein halogen-free or halogen-poor compounds of the noble metals and optionally the non-noble metals are used as metal precursor compounds.

13. A use of the electrocatalysts according to any of claims 1 to 9 in electrochemical devices, such as PEM fuel cells, direct methanol fuel cells (DMFC), reversible fuel cells or electrolyzers.

## Revendications

1. Catalyseur électrique pour piles à combustible comprenant un support électriquement conducteur ainsi qu'une espèce à action catalytique, le support conducteur étant un matériau support inorganique, multi-composant de composition OX1-OX2, dans laquelle
- OX1 = un oxyde non électriquement conducteur ayant une surface spécifique (BET) dans la plage de 50 à 400 m²/g et
- OX2 = un oxyde conducteur,
des métaux nobles du groupe formé par le ruthénium, l'osmium, le rhodium, l'iridium, le palladium, le platine, l'agent et l'or ainsi que leurs mélanges ou alliages étant utilisés en tant qu'espèce à action catalytique
et dans lequel
le matériau support multi-composant conducteur a une structure noyau/enveloppe (structure « core-shell »), dans laquelle une couche électriquement conductrice constituée par un composant oxyde OX2 électriquement conducteur est appliquée en forme d'enveloppe sur le noyau, conférant une structure, le noyau constitué par le composant oxyde OX1 non électriquement conducteur,
l'enveloppe pouvant être formée de manière continue ou être discontinue et l'enveloppe pouvant présenter des interruptions, des trous
(« pinholes »), des agglomérats et des défauts
et le matériau support multi-composant OX1-OX2 présentant une conductibilité électrique dans la plage >0,01 S/cm
et dans lequel les espèces à action catalytique sont appliquées sous forme de particules à action catalytique sur le composant conducteur OX2.

2. Catalyseur électrique selon la revendication 1, l'oxyde inorganique OX1 étant choisi dans le groupe formé par l'oxyde de titane (TiO₂), l'oxyde d'aluminium (Al₂O₃), le dioxyde de silicium (SiO₂), le dioxyde de zirconium (ZrO₂), l'oxyde d'yttrium (Y₂O₃), l'oxyde de cérium (Ce₂O₃), le dioxyde de cérium (CeO₂), l'oxyde de lanthane (La₂O₃), le dioxyde d'étain (SnO₂) ainsi que les mélanges et les combinaisons de ceux-ci.

3. Catalyseur électrique selon une des revendications 1 ou 2, l'oxyde conducteur OX2 étant choisi dans le groupe formé par le dioxyde de ruthénium (IV) (RuO₂), l'oxyde d'iridium (IV) (IrO₂), l'oxyde de tungstène (WOₓ), l'oxyde de molybdène (MoOₓ), l'oxyde de niobium (NbOₓ), l'oxyde de tantale (TaOₓ), l'oxyde d'étain (SnOₓ), l'oxyde de titane réduit (TiOₓ) ainsi que les mélanges et les combinaisons de ceux-ci.

4. Catalyseur électrique selon la revendication 3, l'oxyde conducteur OX2 contenant des additifs des éléments vanadium, niobium, tantale ou antimoine, des ajouts des ions halogénés F⁻ ou Cl⁻ ainsi que des mélanges et des combinaisons de ceux-ci.

5. Catalyseur électrique selon une des revendications 1 à 4, l'oxyde conducteur OX2 se trouvant en des proportions de 10 à 99 % en poids, de préférence en des proportions de 20 à 95 % en poids (par rapport au poids total du matériau support).

6. Catalyseur électrique selon une des revendications 1 à 5, le platine ainsi que les alliages de platine avec les métaux non nobles du groupe formé par le vanadium, le chrome, le manganèse, le fer, le cobalt, le nickel, le cuivre et le zinc étant utilisés comme espèce à action catalytique.

7. Catalyseur électrique selon une des revendications 1 à 6, l'espèce à action catalytique se trouvant sous forme de fines particules présentant une grosseur moyenne de particule entre 1 et 100 nm sur le matériau support OX1-OX2.

8. Catalyseur électrique selon une des revendications 1 à 7, l'espèce à action catalytique se trouvant en des proportions de 5 à 60 % en poids, de préférence en des proportions de 5 à 40 % en poids (à chaque fois par rapport au poids total du catalyseur) sur le matériau support OX1-OX2.

9. Catalyseurs électriques selon la revendication 1, présentant la composition Pt/IrOₓ-TiO₂, PtCo/IrOₓ-TiO₂, Pt/IrOₓ-Al₂O₃, Pt/SbSnOₓ-TiO₂, PtNi/SbSnOₓ-Al₂O₃, Pt/TaSnOₓ-TiO₂, Pt/NbSnOₓ-TiO₂ et Pt/NbTiOₓ-TiO₂.

10. Procédé pour la préparation d'un catalyseur électrique comprenant un support électriquement conducteur ainsi qu'une espèce à action catalytique, le support électriquement conducteur étant un matériau support inorganique, multi-composant de composition OX1-OX2, dans laquelle
- OX1 = un oxyde non électriquement conducteur ayant une surface spécifique (BET) dans la plage de 50 à 400 m²/g et
- OX2 = un oxyde conducteur
et des métaux nobles du groupe formé par le ruthénium, l'osmium, le rhodium, l'iridium, le palladium, le platine, l'agent et l'or ainsi que leurs mélanges ou alliages étant utilisés en tant qu'espèce à action catalytique
et dans lequel
le matériau support multi-composant conducteur présente une structure noyau/enveloppe (structure « core-shell »), dans laquelle une couche électriquement conductrice constituée par un composant oxyde OX2 électriquement conducteur est appliquée en forme d'enveloppe sur le noyau, conférant une structure, le noyau constitué par le composant oxyde OX1 non électriquement conducteur,
l'enveloppe pouvant être formée de manière continue ou être discontinue et l'enveloppe pouvant présenter des interruptions, des trous
(« pinholes »), des agglomérats et des défauts
et le matériau support multi-composant OX1-OX2 présentant une conductibilité électrique dans la plage >0,01 S/cm
et dans lequel les espèces à action catalytique sont appliquées sous forme de particules à action catalytique sur le composant conducteur OX2,
comprenant les étapes de
a) revêtement de l'oxyde OX1 par l'oxyde conducteur OX2 par précipitation ou imprégnation avec des composés précurseurs de OX2 appropriés, facultativement suivi d'un séchage et/ou d'une calcination du support conducteur OX1-OX2 résultant,
b) dépôt de l'espèce à action catalytique sur le support OX1-OX2 par précipitation ou imprégnation avec des composés précurseurs métalliques appropriés, facultativement suivi d'une réduction et/ou d'un séchage et/ou d'une calcination.

11. Procédé selon la revendication 10, les composés précurseurs de OX2 étant choisis dans le groupe formé par l'acide d'hexachloro-iridium (IV), le chlorure d'iridium (III), le nitrate d'iridium (III), le nitrate de Ru(III)-nitrosyle, l'acétate de Ru (III), l'acétylacétonate de Ru (III), le SnCl₄ x 5H₂O, l'acétate de Sn, le nitrate d'étain (II), le SbCl₃, le nitrate d'antimoine (III), l'acétate d'antimoine (III), le molybdate d'ammonium ([NH₄]₂MoO₄), le molybdate de sodium, le tungstate d'ammonium ([NH₄]₂WO₄), le tungstate de sodium, le vanadate d'ammonium ([NH₄]VO₃), l'oxalate de niobium (V) et d'ammonium, l'oxalate de tantale (V) et d'ammonium et le vanadate de sodium.

12. Procédé selon la revendication 11, des composés exempts d'halogène ou pauvres en halogène des métaux nobles et facultativement des métaux non nobles étant utilisés comme composés précurseurs métalliques.

13. Utilisation des catalyseurs électriques selon une des revendications 1 à 9 dans des dispositifs électrochimiques tels que les piles à combustible PEM (à membrane échangeuse de protons), les piles à combustible à méthanol direct (DMFC), les piles à combustible réversibles ou les électrolyseurs.
